Europäisches Patentamt

European Patent Office

Office européen des brevets

(19)

(11) Veröffentlichungsnummer: **0 164 510**

**A1**

(12) # EUROPÄISCHE PATENTANMELDUNG

(21) Anmeldenummer: **85103665.7**

(22) Anmeldetag: **27.03.85**

(51) Int. Cl.⁴: **G 21 C 19/34**

(30) Priorität: **12.05.84 DE 3417742**

(43) Veröffentlichungstag der Anmeldung:
**18.12.85 Patentblatt 85/51**

(84) Benannte Vertragsstaaten:
**BE CH DE FR GB IT LI NL SE**

(71) Anmelder: **STEAG Kernenergie GmbH**
**Bismarckstrasse 54**
**D-4300 Essen(DE)**

(72) Erfinder: **Bienek, Heinz, Dipl.-Ing.**
**Freiherr vom Stein-Strasse 4**
**D-4200 Oberhausen(DE)**

(72) Erfinder: **Wick, Wilhelm, Dr. Dipl.-Ing.**
**Neckarstrasse 27**
**D-4300 Essen 18(DE)**

(54) Verfahren zum Deassemblieren von Brennelementen und Vorrichtung zur Durchführung des Verfahrens.

(57) Bei einem Verfahren zum Deassemblieren von Brennelementen mit zwei Endstücken, einer Vielzahl von mit den Endstücken verbundenen Verbindungsrohren, einer Vielzahl von mit den Verbindungsrohren verbundenen Abstandhaltern, in denen um die Verbindungsrohre verteilt angeordnete Brennstäbe reibschlüssig gehalten sind, bei dem die Verbindungsrohre von innen geschnitten, danach eines der Endstücke entfernt und die Brennstäbe aus den Abstandhaltern herausgezogen werden, ist erfindungsgemäß vorgesehen, daß die Verbindungsrohre (4) etwa im Bereich der maximalen Stableistung zwischen zwei Abstandhaltern (5) von innen geschnitten werden, daß eines der Endstücke (2) mit den mit ihm verbundenen Strukturelementen um ein vorgegebenes Stück in Längserstreckungsrichtung des Brennelementes (1) verschoben wird, die Brennstäbe im Bereich zwischen den Schnittenden der Verbindungsrohre an ihren Mantelflächen lagenweise erfaßt und dabei auf Abstand festgehalten (7) werden und danach die Endstücke (2,3) mit den mit ihnen verbundenen Strukturelementen des Brennelements von den Brennstäben abgezogen werden.

Fig. 1a          Fig. 1b

EP 0 164 510 A1

STEAG Kernenergie GmbH
Bismarckstraße 54
4300 Essen 1

Stichwort: Deassemblierung
Az. 748

**Verfahren zum Deassemblieren von Brennelementen und**
**Vorrichtung zur Durchführung des Verfahrens**

Die Erfindung betrifft ein Verfahren zum Deassemblieren von Brennelementen mit zwei Endstücken, einer Vielzahl von mit den Endstücken verbundenen Verbindungsrohren, insbesondere Steuerstabführungsrohren, einer Vielzahl von mit den Verbindungsrohren verbundenen und zwischen den Endstücken angeordneten Abstandhaltern, in denen eine Vielzahl von um die Verbindungsrohre verteilt angeordneten Brennstäben reibschlüssig gehalten ist, bei dem die Verbindungsrohre von innen geschnitten, danach eines der Endstücke entfernt und die Brennstäbe aus den Abstandhaltern herausgezogen werden.

Ein solches Verfahren ist aus NUCLEAR ASSURANCE CORPORATION, VOLUME II - UNDERWATER NUCLEAR FUEL DISASSEMBLY AND ROD STORAGE PROCESS AND EQUIPMENT DESCRIPTION - September 1981, Seiten 3-17, 3-18 bekannt (vgl. auch US-PS 4 446 098). Bei dem bekannten Verfahren wird ein Innenrohrschneider bekannter Bauart eingesetzt, der üblicherweise bei der Reparatur von Dampferzeugerrohren verwendet wird. Die Steuerstabführungsrohre werden unmittelbar unterhalb des Brennelementkopfstücks, aber oberhalb der Brennstabköpfe geschnitten, so daß das Kopfstück entfernt werden kann. Ein einzelner Schneidkopf, der an einer langen Aluminiumstange befestigt ist, wird nacheinander in die Führungsrohre eingeführt und die Rohre werden geschnitten. Nach Abnehmen des Kopfstückes werden die Brennstäbe einzeln oder in Gruppen aus den noch mit dem Fußstück verbundenen Abstandhaltern herausgezogen und in einen Behälter eingebracht. Es hat sich herausgestellt, daß abgebrannte Brennstäbe häufig im Bereich der maximalen Stableistung Aufbeulungen aufweisen. Bei dem bekannten Verfahren müssen diese Aufbeulungen durch die Abstandhalter hindurchgezogen werden, was zu erheblichen Schwierigkeiten führen kann. Darüber hinaus ist das bekannte Verfahren wegen der Entfernung einzelner Brennstäbe oder nur kleiner Brennstabgruppen sehr zeitaufwendig. Aus der US-PS 4 446 098 ist der gleichzeitige Einsatz einer Vielzahl von Innenschneidköpfen entsprechend der Anzahl der Steuerstabführungsrohre bekannt, wobei allerdings der Schnitt unmittelbar unter dem Kopfstück erfolgt.

Es ist die Aufgabe der vorliegenden Erfindung, ein Verfahren anzugeben, das das Deassemblieren von abgebrannten Brennelementen vereinfacht.

Diese Aufgabe wird dadurch gelöst, daß die Verbindungsrohre etwa im Bereich der maximalen Stableistung zwischen zwei Abstandhaltern von innen, vorzugsweise gleichzeitig, geschnitten werden, daß eines der Endstücke mit den mit ihm verbundenen Abschnitten der Verbindungsrohre und mit diesen verbundenen Abstandhaltern um ein vorgegebenes Stück in Längserstreckungsrichtung des Brennelementes verschoben wird, die Brennstäbe im Bereich zwischen den Schnittenden der Verbindungsrohre an ihren Mantelflächen lagenweise erfaßt und dabei auf Abstand festgehalten werden und danach die Endstücke mit den mit ihnen verbundenen Strukturelementen des Brennelements von den Brennstäben abgezogen werden.

Bei dieser Verfahrensführung braucht keiner der Abstandhalter über die Ausbeulungen der Brennstäbe gezogen zu werden, wodurch die stabspezifischen Zugbelastungen erheblich reduziert werden. Darüber hinaus
wird die Zugbelastung nicht durch die Gesamtheit
der Abstandhalter bestimmt, sondern nur durch einen
durch die Lage der Schnittstellen bestimmten Anteil.
Alle Brennstäbe liegen als ein von den Strukturelementen des Brennelements befreites Bündel vor.

Aus der DE-OS 29 46 464 ist ein Verfahren zum Zerlegen
von Brennelementen in Einzelstäbe bekannt, die in
Zellen von Abstandshaltern gehalten sind, die ihrerseits an der Innenwandung eines Brennelementumhüllungskastens befestigt sind. Dabei wird der Hüllkasten
annähernd in der Mitte mittels eines von außen angesetzten Umfangsschnitts in zwei Teile geteilt. Danach
wird der obere Teil des Hüllkastens mit den daran
befestigten Abstandshaltern von dem Brennstabbündel
abgezogen. Anschließend werden die Brennstäbe aus
dem unteren Teil des Hüllkastens gezogen. Das aus
der DE-OS 29 46 464 bekannte Brennelement weicht
in seiner Bauart völlig von den Brennelementen ab,
die nach dem vorliegenden Verfahren deassembliert
werden sollen. Diese weisen keinen Hüllkasten, sondern
innerhalb des Brennstabbündels verteilte fest mit
Kopf- und Fußstück verbundene Verbindungsrohre auf
und die Brennstäbe sind bereits vor Einsatz in einen
Reaktor reibschlüssig in einer Vielzahl von übereinander liegenden Abstandshaltern gehalten, und zwar
ohne zusätzliche Halterung in Kopf- und Fußstück.

Vorzugsweise wird zunächst das eine Endstück mit
den mit ihm verbundenen Strukturelementen von den
Brennstäben abgezogen, ehe das andere Endstück abgezogen wird.

Weiterhin ist es von Vorteil, daß vor dem Abziehen des einen Endstückes die Brennstäbe an mindestens einer von der ersten Erfassungsstelle in Längsrichtung des Brennelements gesehen entfernten zweiten Stelle erfaßt und lagenweise auf Abstand gehalten werden, um die Bündelkonfiguration der Brennstäbe aufrechtzuerhalten.

Auf besonders einfache Weise können die Brennstäbe erfaßt und lagenmäßig auf Abstand gehalten werden, wenn zwischen den Brennstäben die Finger eines Fingergreifers eingeführt werden, bei dem die Breite der Finger nach Einführen des Fingergreifers vergrößerbar ist.

Üblicherweise werden die von den Strukturelementen befreiten Brennstäbe in einen Behälter eingebracht. Daher ist es zweckmäßig, daß mit Hilfe des Eingriffs an den Mantelflächen das Brennstabbündel in einen Behälter eingebracht wird, wobei der Eingriff an den Brennstäben erst gelöst wird, wenn sich bei in den Behälter teilweise eingeführten Brennstäben die Eingriffstelle kurz über der Behälteröffnung befindet.

Da die Brennelemente üblicherweise einen von dem Aufnahmequerschnitt des Behälters abweichenden Querschnitt besitzen, ist es zweckmäßig, das Brennstabbündel über einen Trichter in den Behälter einzubringen, dessen Einführungsöffnung an den Bündelquerschnitt und dessen Austrittsöffnung an den Behälterquerschnitt angepaßt sind.

Für das Schneiden der Verbindungsrohre von Innen eignen sich mechanische Schneidwerkzeuge oder unter einem hohen Druck stehende Strömungsmittelstrahlen, vorzugsweise Wasser.

Aus der DE-OS 30 07 876 ist das abschnittsweise Zerkleinern abgebrannter Brennelemente mit Hilfe eines von außen auf die Brennelementoberfläche ausgerichteten Hochgeschwindigkeitsstrahls mit 4000 bar bekannt, bei dem die Brennstäbe eines gesamten Brennelements zerschnitten werden. Das ablaufende Wasser des Hochge-schwindigkeitsstrahls führt kleine Mengen Material-staubes und Späne mit sich, die über Filter zurückgehalten und entfernt werden. Das Schneiden findet somit in freier Luft statt und unter Aufschneiden der Brennstäbe statt, so daß deren radioaktiver Inhalt beim Zerkleinern freigesetzt wird.

Bei dem erfindungsgemäßen Verfahren werden vorzugsweise die Verbindungsrohre von innen unter Wasser in einem Brennelementlagerbecken geschnitten, das vorzugsweise einem Kernkraftwerk zugeordnet ist. Dabei wird wiederum bevorzugt, daß das Lagerbeckenwasser selbst als Schneidströmungsmittel benutzt wird. Beim unter Wasser durchgeführten Wasserstrahlinnenschneiden wird gewährleistet, daß beim vorzugsweise mittigen Trennen der Verbindungsrohre, insbesondere Steuerstabführungsrohre, die das Verbindungsrohr jeweils umgebenden Brennstäbe vor dem aus dem Verbindungsrohr gegen Ende des Schneidvorgangs austretenden Schneidstrahl geschützt sind. Der austretende Schneidstrahl wird im Umgebungswasser stark verwirbelt und abgelenkt. Der Schutz kann durch andere Maßnahmen wie Einstellung des Düsenbrennpunkts in den Bereich der inneren Oberfläche des Verbindungsrohrs im Falle einer fokussierenden Düse, Veränderung des Strahlauftreffwinkels gegenüber senkrechtem Aufprall, Reduzierung des Strömungsmitteldrucks auf z. B. 2700 bar bei Erhöhung der Schneidzeit, Aufbau einer gerichteten Strömung in den die Brennstäbe umgebenden Wassermantel, insbesondere einer zu den Brennstäben parallelen Strömung, verbessert werden. Aus einer gerichteten Strömung um das Brennelement können auch Wasserstoffteilchen ausgefiltert werden.

Die Erfindung richtet sich auch auf eine Vorrichtung zur Durchführung des Verfahrens und weist mindestens eine Einrichtung zum Innenschneiden der Verbindungsrohre bestehend aus einem Schneidkopf und einer Antriebswelle und mit mindestens einer Einrichtung zum Erfassen der Brennstäbe auf.

Erfindungsgemäß ist die Vorrichtung dadurch gekennzeichnet, daß sie mindetens einen von der Seite her zwischen die Lagen der Brennstäbe einführbaren Fingergreifer aufweist, dessen Fingerbreite derart veränderbar ist, daß die Finger an den Mantelflächen der Brennstäbe reibschlüssig und/oder formschlüssig anlegbar sind.

Zur Aufrechterhaltung der Bündelstruktur ist es von Vorteil, wenn mehrere in Längsrichtung des Brennelements gesehen übereinander angeordnete Fingergreifer vorgesehen sind.

Ein besonders einfacher Aufbau des oder der Fingergreifer für die schmalen Spalte zwischen den Brennstablagen wird erreicht, wenn die Finger mit einem Grundkörper in Abständen entsprechend den Abständen der Brennstäbe verbunden sind und jeweils eine durch ein Strömungsmittel beaufschlagbare Kammer aufweisen, die von mindestens einer elastisch verformbaren und an die Mantelfläche der zugeordneten Brennstäbe anlegbaren Wandung begrenzt ist. Ein besonders gut positionierbarer und zwischen die Lagen der Brennstäbe einführbarer Fingergreifer wird erreicht, wenn der einzelne Finger aus einem starr mit dem Grundkörper verbundenen Fingerrahmen besteht, mit dem mindestens eine flexible Membran verbunden ist.

Da die Steuerstabführungsrohre nur einen Durchmesser im Bereich von 10 mm aufweisen, ist es von Vorteil, wenn der Schneidkopf besonders einfach aufgebaut ist.

Die Erfindung betrifft auch Einrichtungen zum Innenschneiden von Rohren mindestens bestehend aus einem Schneidkopf und einer Antriebswelle, die insbesondere für den Einsatz in der erfindungsgemäßen Vorrichtung geeignet sind. Ein anderes Einsatzgebiet ist z. B. das Innenschneiden von Wärmetauscherrohren.

Bei einer Ausführungsform einer erfindungsgemäßen Einrichtung ist in dem Schneidkopf ein entgegen der Wirkung einer Feder radial aus dem Schneidkopf herausschiebbares Schneidwerkzeug gelagert, das mittels eines über die Antriebswelle herangeführten Strömungsmittels in Schneidposition verschiebbar ist.

Wenn man auf die Zuführung eines zur Positionierung des Schneidwerkzeuges erforderlichen Strömungsmittel verzichten will, bietet sich an, daß in dem Schneidkopf ein um eine quer zum Schneidkopf sich erstreckende Achse verschwenkbares Schneidwerkzeug mit einer bezüglich der Achse exzentrischen Massenverteilung gelagert ist, das zusätzlich quer zur Achse verschwenk- und verschiebbar ist und daß das Schneidwerkzeug durch ein vorgespanntes Federsystem mit gegenläufigen Federmomenten in Schneidposition bringbar ist, wobei der Schneiddruck bestimmt ist durch die Vorspannung des Federsystems und durch die bei Drehung des Schneidkopfes einstellende Zentrifugalkraft.

0164510

Schließlich kann auf ein verschiebbares und/oder verschwenkbares Schneidwerkzeug im Schneidkopf vollständig verzichtet werden, wenn in dem Schneidkopf mindestens eine vorzugsweise fokussierende Schneiddüse angeordnet ist, die über die Welle mit einem unter hohen Druck stehenden Strömungsmittel beaufschlagt ist.

Es ist klar, daß die vorstehend beschriebenen Schneideinrichtungen mit unterschiedlicher Drehzahl arbeiten können, wobei die Drehzahl an die Funktionsweise und/oder die Schnittgeschwindigkeit angepaßt ist.

Es ist von Vorteil, wenn der Schneidkopf mit einer flexiblen Antriebswelle verbunden ist, um auch in ihrer Rohrachse nicht geradlinige Verbindungsrohre, insbesondere Steuerstabführungsrohre, gebogene Wärmetauscherrohre usw. schneiden zu können oder das Einführen des Schneidkopfes zu erleichtern. Weist die Einrichtung mehrere Schneidköpfe auf, sind daran Antriebswellen vorzugsweise antriebsmäßig mit einem einzigen Antrieb gekoppelt; es ist jedoch auch möglich, jedem Schneidkopf einen gesonderten Antrieb zuzuordnen.

Das erfindungsgemäße Verfahren und eine Vorrichtung sollen nun anhand der beigefügten Figuren genauer erläutert werden. Es zeigt:

Figuren 1a - 1d
ein Brennelement mit verschiedenen Deassemblierungsstufen unter gleichzeitiger Darstellung des Instellungbringens der verschiedenen Fingergreifer,

Figuren 2a - 4b
drei verschiedene Ausführungsformen für einen zum Innenschneiden der Verbindungsrohre geeigneten Schneidkopf,

**Figur 5**

eine Teilaufsicht auf einen der beim Deassemblieren
eingesetzten Fingergreifer,

**Figur 6**

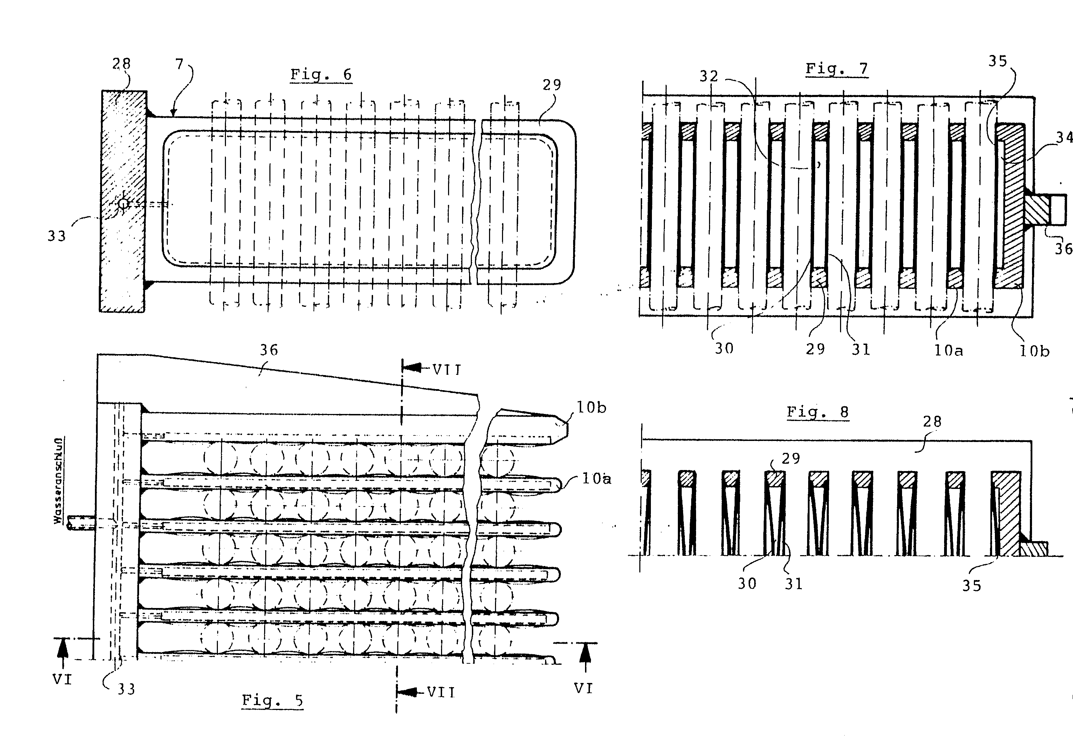

einen Schnitt längs der Linie VI - VI in Figur 5,

**Figur 7**

einen Teilschnitt längs der Linie VII - VII in Figur 5
mit an den Brennstäben anliegenden Kammerwänden,

**Figur 8**

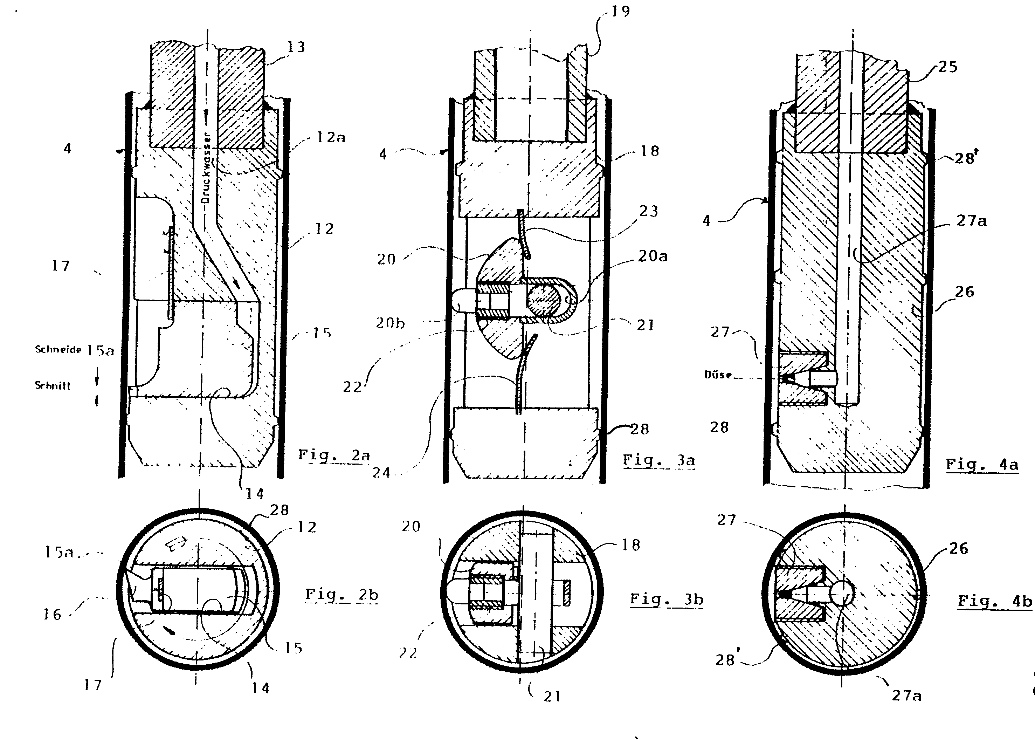

eine Teildarstellung vergleichbar Figur 7 mit entlasteten Kammern, wobei die Membranen nach Innen zurückgestellt sind (Eigenrückstellung oder Unterdruck),

**Figur 9**

einen Teilschnitt durch eine Innenschneideinrichtung
mit mehreren Schneidköpfen vergleichbar Figur 4a,

**Figur 10**

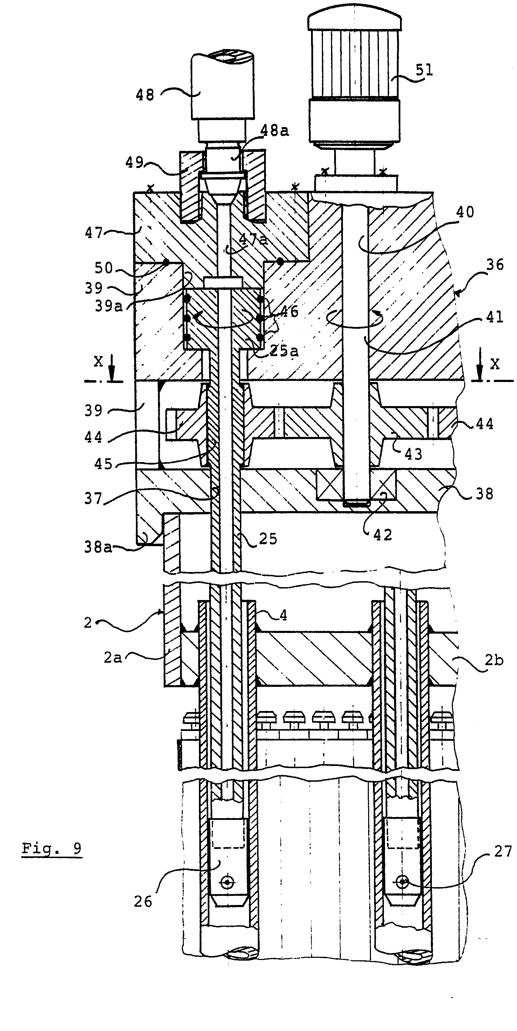

einen Schnitt längs der Linie X - X in Figur 9 mit
Festlegung der Teilschnittlinie IX - IX in Figur 9
und

**Figur 11**

eine Schemaskizze zur Erläuterung des Einsatzes einer
Innenschneideinrichtung in einem mit Wasser gefüllten
Lagerbecken.

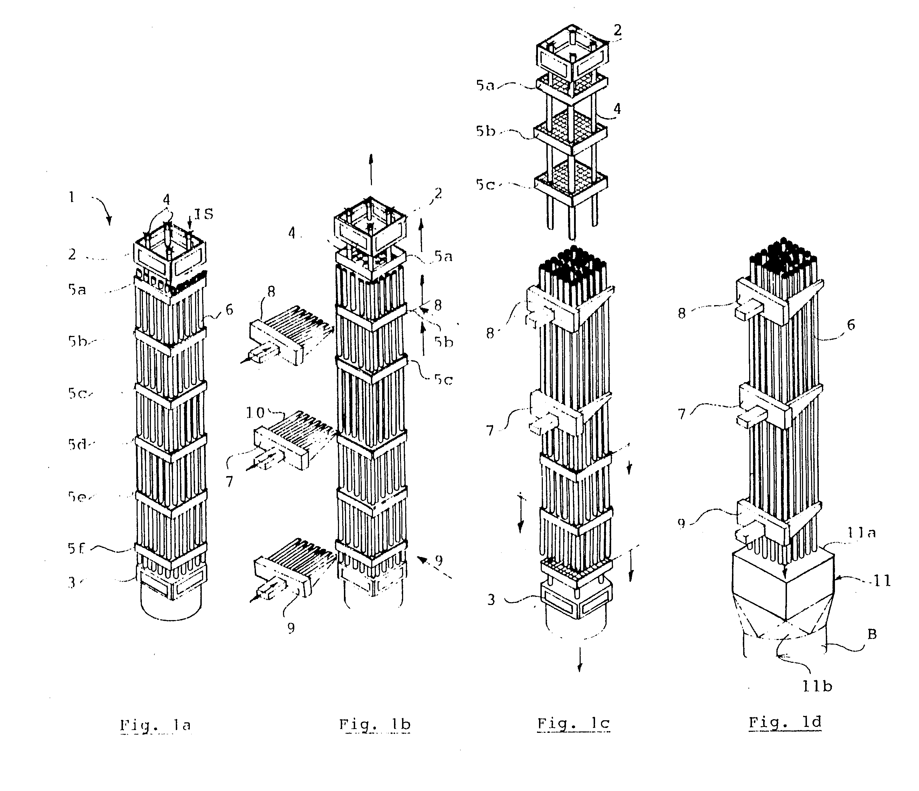

In der Figur 1a ist ein Brennelement 1 für Leichtwasserreaktoren dargestellt. Es besteht aus einem Kopfstück 2 und einem Fußstück 3, die durch vier mit
ihnen verschweißte und das Kopfstück durchsetzende
Verbindungsrohre 4 verbunden sind. Es wird darauf aufmerksam gemacht, daß bei dem tatsächlich eingesetzten Brennelement mehr als vier Verbindungsrohre vorgesehen sein können. Zur Vereinfachung der Darstellung des erfindungsgemäßen Deassemblierungsverfahrens sind in den Figuren 1a - 1c jeweils nur vier Verbindungsrohre dargestellt. Die Verbindungsrohre werden vorzugsweise als Steuerstabführungsrohre verwendet.

Mit den Verbindungsrohren 4 sind sechs Abstandhalter 5a - 5f verschweißt. In den Abstandhaltern, die gitterartig aufgebaut sein können (vgl. insbes. Fig. 1c), sind eine Vielzahl von Brennstäben 6 reibschlüssig gehalten. Bei der gezeigten Ausführungsform sind 32 Brennstäbe schematisch in einem 6 x 6 = 36 Brennstabgitter dargestellt.

Zum Deassemblieren des in der Figur 1a dargestellten Brennelements mit im wesentlichen quaderförmiger Konfiguration wird dieses in einen zur Vereinfachung der Darstellung nicht gezeigten Vorrichtungsrahmen eingesetzt und im Bereich des Kopfstückes 2 des Fußstückes 3 und an den mittleren Abstandhaltern 5c und 5d festgespannt. Dies kann durch Spanneinrichtungen geschehen, wie sie in NUCLEAR ASSURANCE CORPORATION, VOLUME IV - SAFETY ANALYSIS REPORT SUPPLEMENT FOR CONSOLIDATED FUEL ROD STORAGE AT AN INDEPENDENT SPENT FUEL STORAGE INSTALLATION - September 1981, unter Punkt 4.2.3.2.1.4 in Zusammenhang mit der Figur 4-4 - "Clamp Assembly" - beschrieben sind.

Nach Festlegen des Brennelements 1 wird jeweils ein Innenrohrschneider IS von oben in die offenen Enden der Verbindungsrohre 4 eingeführt bis seine Schneidebene in etwa in der Mitte zwischen den Abstandhaltern 5c und 5d liegt. Bevorzugte Beispiele für den Innenschneider IS sind in den Figuren 2 - 4 dargestellt. Es ist auch möglich, gleichzeitig in jedes Verbindungsrohr einen Innenschneider IS abzusenken.

Die am Kopfstück 2 und am Abstandhalter 5c angreifenden Klemmeinrichtungen können relativ zu den am Fußstück 3 und am Abstandhalter 5d angreifenden Klemmeinrichtungen in Längsrichtung des Brennelements bewegt werden, wie dies in der Figur 1b durch die nach oben zeigenden Pfeile dargestellt ist. Nach Kontrolle auf einwandfreie Trennung der Verbindungsrohre 4 werden Kopfstück 2 und die damit verbundenen Abstandhalter 5a, 5b und 5c angehoben; z. B. so weit, daß die Schnittflächen der Verbindungsrohre 4 einen Abstand von ca. 100 mm voneinander aufweisen. Es ist auch möglich, nicht in Längsrichtung verschiebbare Klemmeinrichtungen zu lösen und das Kopfstück mit einer Hebeeinrichtung anzuheben.

In der Vorrichtung sind drei Fingergreifer 7, 8 und 9 horizontal hin und her verschieblich und übereinander angeordnet. Bei in der Vorrichtung eingesetztem Brennelement 1 wird zunächst der Fingergreifer 7 im Trennbereich der Verbindungsrohre zwischen die lagenartig angeordneten Brennstäbe 6 eingeschoben. Nach Einschieben des Fingergreifers 7 zwischen die Brennstablagen kann die wirksame Breite der Finger 10 vergrößert werden, so daß die Brennstäbe in dem Fingergreifer eingespannt werden. Anhand der Figuren 6 - 8 wird ein Fingergreifer beschrieben, bei dem eine Verbreiterung der Finger auf hydraulische oder pneumatische Weise erfolgt.

Danach wird das Kopfstück 2 weiter angehoben, bis der Fingergreifer 8 zwischen die Brennstablagen eingeführt werden kann und die Brennstäbe festlegen kann. Danach wird, wie in der Figur 1c dargestellt, die abgetrennte Baugruppe ganz vom Brennelement 1 nach oben abgezogen, verfahren und abgelegt. Die Figuren 1b und 1c zeigen ein ideales Verhalten der reibschlüssig in den Abstandhaltern aufgenommenen Brennstäbe. Es ist möglich, daß beim Anheben des Kopfstückes gemäß Figur 1b sich ein Teil der Brennstäbe des Bündels mit den Abstandhaltern 5a, 5b und 5c nach oben bewegt, d. h. um den Anhebebetrag bei der Figur 1b über die anderen Brennstäbe hervorragt, weil der Reibschluß zu diesen Abstandhaltern größer ist als zu den Abstandhaltern 5d - 5f. Beim weiteren Anheben gemäß Figur 1c ist der Reibschluß durch 5d - 5f durch den Greifer 7 so verstärkt, daß eine weitere relative Verschiebung der Brennstäbe nicht möglich ist.

Nach dem Ablegen des Kopfstückes 2 wird das Fußstück 3 mit den mit ihm verbundenen Teilen so weit abgesenkt, bis der Fingergreifer 9 zwischen die Brennstablagen eingefahren werden kann. Nach Beaufschlagen der Finger 10 des Fingergreifers 9 wird das Fußstück vollständig entfernt. Das Absenken kann wieder mittels der Klemmeinrichtungen oder mittels einer gesonderten Absenkeinrichtung erfolgen.

Nunmehr wird unter das von den Fingergreifern 7, 8 und 9 gehaltene Bündel von Brennstäben 6 ein Lagerbehälter B positioniert, auf dem ein Trichter 11 aufgesetzt ist. Der Trichter 11 hat eine an den Querschnitt des Brennelementbündels angepaßte Eintrittsöffnung 11a und eine an den Querschnitt des Behälters 10 angepaßte Austrittsöffnung 11b.

Nach Positionierung des Brennstabbündels über den Trichter 11 wird der Fingergreifer 9 entspannt und abgezogen. Daraufhin wird das Bündel in den Trichter abgesenkt. Sobald es die Querschnittsanpassung im Trichter 11 erforderlich macht, wird der Fingergreifer 7 abgezogen. Beim weiteren Absenken des Bündels wird später in entsprechender Weise der Fingergreifer 8 abgezogen.

Es ist auch möglich, zum Einbringen der Brennstäbe in den Behälter an den Köpfen der Brennstäbe eine Mehrfachgreifeinrichtung angreifen zu lassen, wie sie z. B. in NUCLEAR ASSURANCE CORPORATION, VOLUME II - UNDERWATER NUCLEAR FUEL DISASSEMBLY AND ROD STORAGE PROCESS AND EQUIPMENT DESCRIPTION - September 1981, Seiten 3-26 - 3-27 beschrieben ist. Falls der vorstehend beschriebene Überstand einiger der Brennstäbe infolge des ersten Anhebevorgangs des Kopfstückes 2 nicht tolerierbar ist, wird nach Ablegen des Kopfstückes 2 die Beaufschlagung der Finger 10 der Fingergreifer 7 und 8 abgebaut, so daß durch eine auf die Köpfe aufgesetzte Richtplatte (nicht gezeigt) die mitangehobenen Brennstäbe in ihre ursprüngliche Lage zurückgeschoben werden. Danach befinden sich die Köpfe wieder alle auf gleicher Höhe, so daß die Mehrfachgreifeinrichtung an allen Köpfen gleichzeitig angreifen kann.

Bei der in den Figuren 1b - 1d beschriebenen Anordnung bewegen sich die Fingergreifer 7, 8, 9 in gleicher Richtung. Es ist durchaus möglich, daß eine Anordnung getroffen wird, bei der z. B. der Greifer 7 einer Seite des Brennelements und die Greifer 8 und 9 übereinanderliegend einer benachbarten Seite zugeordnet sind und die Eingriffsrichtung der Fingergreifer 8 und 9 sich senkrecht zur Eingriffsrichtung des Fingergreifers 7 erstreckt, so daß bei einem beabsichtigten oder unbeabsichtigten Lösen der Fingergreifer die Brennstäbe wegen des überkreuzten Eingriffs der Finger nicht seitlich aus den Greifern herausfallen können (vgl. gestrichelte Pfeile 8 und 9 in Figur 1b).

Die in den Figuren 2 - 4 gezeigten Innenrohrschneider eignen sich ganz besonders für das Innenrohrschneiden in einem beträchtlichen Abstand von der Rohröffnung.

Bei den Brennelementen 1 soll das Schneiden in einem Abstand von rd. 2 - 3 m von der Rohröffnung erfolgen, während beim vorstehend zitierten bekannten Rohrinnenschneider für Steuerstabführungsrohre die Schnittstelle unmittelbar unterhalb des Kopfstückes, d. h. in kurzem Abstand vom Rohrende liegt.

Bei dem in den Figuren 2a und 2b gezeigten Innenrohrschneider ist der Schneidkopf 12 über eine hohle flexible Antriebswelle 13 mit einem nicht gezeigten Antrieb und einer nicht gezeigten Druckmittelquelle, z. B. Druckwasser, verbunden. Flexible Antriebswellen sind in verschiedensten Bauarten bekannt. Unter Umständen reicht die Flexibilität eines Stabes oder Rohres mit entsprechender Geometrie bereits aus. In einer sich radial erstreckenden Nut 14 ist ein Schneidwerkzeug 15 radial verschieblich gelagert, das an seinem vorderen Ende eine Schneide 15a aufweist, die ggf. als gesonderter Schneideinsatz ausgebildet sein kann, der mit dem Werkzeugträger 16 verbunden ist. Das Schneidwerkzeug wird in der Nut 14 durch eine Blattfeder 17 in einer Lage gehalten derart, daß die Schneide bei nicht druckbeaufschlagter Feder nicht aus der Mantelfläche des Schneidkopfes 12 vorragt. Der Hohlraum der Antriebswelle 13 ist über einen Kanal 12a im Schneidkopf 12 mit dem hinteren Ende der Nut 14 verbunden, so daß bei Beaufschlagung des Kanals 12a mit Druckmittel das Schneidwerkzeug 15 entgegen der Wirkung der Feder 17 radial verschoben wird derart, daß die Schneide in Anlage an die Innenwandung des Verbindungsrohrs 4 gedrückt werden kann, so daß bei Drehung der Antriebswelle 13 der Innenschnitt des Rohrs 4 erfolgen kann.

Bei der Ausführungsform gemäß Figuren 3a und 3b ist ein Schneidkopf 18 mit einer flexiblen Antriebswelle 19 verbunden. In dem Schneidkopf 18 ist ein Schneidwerkzeug 20 um eine sich quer zum Schneidkopf erstreckende Welle 21 verschwenkbar- und verschiebbar gelagert, da die Welle 21 eine Langlochöffnung 20a des Werkzeugs durchsetzt. Die Masseverteilung des auf seiner von der Welle 21 abgewandten Seite vorzugsweise ballig gestalteten Schneidwerkzeuges 20 ist exzentrisch bezüglich der Langlochöffnung 20a ausgebildet, wie dies aus den Figuren 3a und 3b ersichtlich ist. In ein in dem freien Ende der Langlochöffnung 20a ausgebildetes Gewinde 22 ist eine Schneide bzw. Schleifkörper 20b eingeschraubt.

An dem Schneidwerkzeug 20 greifen zwei gegenüberstehende, vorgespannte Blattfedern 23 und 24 so an, daß sie die Schneide 20a in Anlage an die Innenwandung des Rohrs 4 zu drücken suchen. Zugleich bestimmen die Federn 23 und 24 als Gleichgewichtslage für das Schneidwerkzeug die in der Figur 3a mit durchgehenden Linien gezeichnete Schneidlage.

Bei der Einführung des Schneidkopfes in ein Rohr 4 kann das Schneidwerkzeug 20 die in der Figur 3a strichpunktiert dargestellte obere Stellung einnehmen, bei der die obere Blattfeder 23 weiter ausgelenkt wird und die untere Blattfeder 24 entlastet wird. Bei Drehung der Antriebswelle 19 werden evtl. vorhandene Haftkräfte überwunden, und das Schneidwerkzeug 20 bewegt sich in die Schneidlage. Bei Drehung des Schneidkopfes 18 mit Betriebsdrehzahl überlagert die Zentrifugalkraft der exzentrischen Massenverteilung des Schneidwerkzeugs 20 den Anpreßdruck der Blattfedern 23 und 24.

Beim Herausziehen des Schneidkopfes kann das Schneidwerkzeug die in der Figur 3a unten strichpunktiert dargestellte Position einnehmen, bei der die untere Blattfeder 24 unter dem Einfluß der Zugkraft in die ebenfalls strichpunktierte Lage weiter ausgelenkt wird. Durch die Bewegungsmöglichkeiten des Schneidwerkzeugs im Schneidkopf wird ein Verhaken des Schneidwerkzeugs am durchtrennten Rohrende ausgeschlossen.

Ein besonders einfacher Innenrohrschneider wird in den Figuren 4a und 4b dargestellt. Über eine flexible oder starre Welle 25 kann eine in einem Schneidkopf 26 angeordnete Druckwasserdüse 27 über einen Kanal 27a mit Druckwasser beaufschlagt werden, so daß der aus der Düse austretende Strahl die Wandung des Rohres 4 durchschneiden kann. Der Düsenstrahl wird so fokussiert, daß er bei Austritt aus dem Rohr verwirbelt bzw. aufgeweitet wird. Es kann zweckmäßig sein, mehr als eine Düse vorzusehen, insbesondere ist eine zweite der ersten diametral gegenüberliegende Düse sinnvoll, weil dadurch die Reaktionskräfte kompensiert werden. Ferner kann es vorteilhaft sein, dem Wasserstrahl eine tangentiale Komponente aufzuprägen, um durch Verlängerung des Strahlweges bis zum benachbarten Brennstab und/oder durch Veränderung des Auftreffwinkels des Strahls auf der Brennstaboberfläche eine Beschädigung des Stabes bei Spitzen des Schneiddrucks zu vermeiden.

Die zylindrischen Mantelflächen der Schneidköpfe 12, 18 und 26 sind mit Führungsringen 28 bzw. Führungswarzen 28' versehen, wie dies aus den Figuren ersichtlich ist. Unter dem Begriff "Schneiden" wird in den Ansprüchen und in der Beschreibung eine jegliche Art von Materialabtrag verstanden, wie z. B. spanabhebendes Schneiden oder Schleifen.

Die Figuren 6 - 8 dienen der Erläuterung eines hydraulisch arbeitenden Fingergreifers 7, 8 oder 9 für ein Brennelement mit einem Brennstabgitter mit mehr als sieben Brennstäben pro Lage. Der Fingergreifer weist innen liegende Finger 10a und außen liegende Finger 10b auf. Die innen liegenden Finger 10a bestehen jeweils aus einem mit einem Greifergrundkörper 28 verschweißten Rahmen 29, dessen Breite in etwa dem Abstand zweier Brennelementlagen entspricht (vgl. Figur 5) derart, daß der Finger zwischen zwei Lagen eingeschoben werden kann. Mit jedem Rahmen sind zwei flexible Membranen 30 und 31 verbunden, z. B. durch Schweißen, Klemmen oder Kleben, derart, daß vom Rahmen 29 und den Membranen 30 und 31 eine Beaufschlagungskammer 32 begrenzt wird. Diese Beaufschlagungskammer steht mit einem im Greifergrundkörper ausgebildeten Kanal 33 in Verbindung, der mit Wasser beaufschlagbar ist. Bei den endständigen Fingern ist eine Druckkammer 34 vorgesehen, die nur einseitig von einer Membran 35 begrenzt ist und ebenfalls mit dem Kanal 33 verbunden ist. Die äußeren Finger können mechanisch versteift sein, wie dies in der Figur 5 mit 36 gekennzeichnet ist.

Bei Einschieben des Fingergreifers nehmen die Membranen 30, 31 und 35 vorzugsweise die in der Figur 8 gezeigte rückgestellte Lage ein, d. h. die Kammern 32 und 34 sind auf jeden Fall druckentlastet. Nach Einschieben der Finger in die in der Figur 5 gezeigten Position werden die Kammern 32 und 34 mit Wasserdruck beaufschlagt, so daß sich die Membranen 30, 31 und 35 an die Mantelfläche der Brennstäbe gemäß Figur 7 und oberer Spalt in Figur 5 anlegen. In der Figur 5 ist zur Verdeutlichung des Eingriffes die wellenartige Verformung der einzelnen Membran übertrieben dargestellt. Zur Verbesserung des Reibungsangriffes kann die Außenseite der Membran beschichtet oder aufgerauht sein. Vorzugsweise wird als Membranmaterial ein dünnes Federstahlblech verwendet.

Der anhand der Figuren 5 - 8 beschriebene Fingergreifer ist von besonders einfachem Aufbau. Es sind jedoch auch mechanische Fingergreifer denkbar, bei denen z. B. gegeneinander verschiebliche Keile den einzelnen Finger aufbauen. Die Anmeldung ist daher nicht auf die vorstehend beschriebenen hydraulischen Fingergreifer beschränkt, diese werden jedoch bevorzugt.

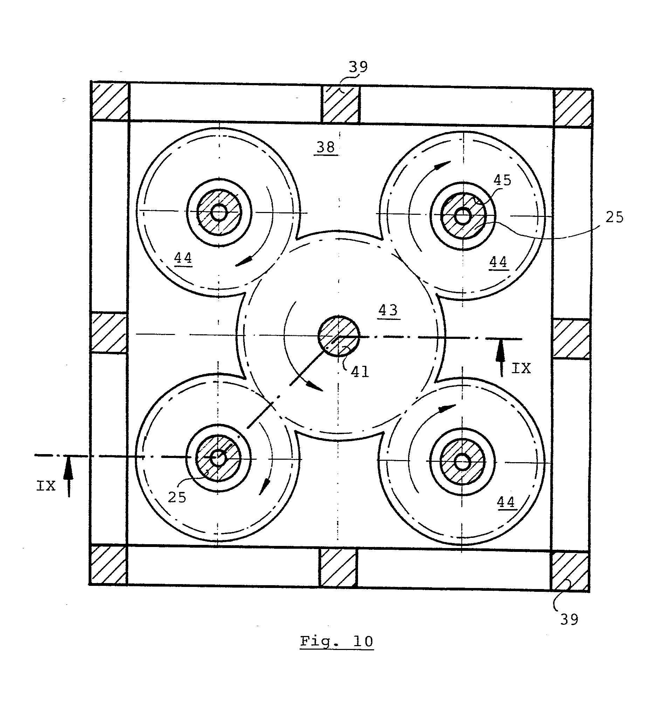

Wie aus den Figuren 9 und 10 ersichtlich ist, besteht das Kopfstück 2 des Brennelements 1 aus einem Kasten 2a und einer Lochplatte 2b, mit der die Führungsrohre 4 verschweißt sind. Die Einrichtung 36 zum Innenschneiden weist vier Schneidköpfe 26 auf, deren Antriebswelle 25 durch Bohrungen 37 einer Grundplatte 38 geführt sind. Oberhalb der Grundplatte 38 ist mittels Stegen eine Deckplatte 39' gehalten. Mittig in der Deckplatte 39 ist eine Bohrung 40 zur Aufnahme einer Welle 41 vorgesehen, die den Zwischenraum zwischen Deckplatte 39 und der Grundplatte 38 durchsetzt und in der Grundplatte 38 in einem Lager 42 drehbar gelagert ist. Auf der Welle 41 ist ein Zahnrad 43 verkeilt. Mit dem Zahnrad 43 kämmen vier Zahnräder 44 die über die durch die Bohrungen 37 greifenden Enden der Antriebswellen 25 geschoben sind und mit diesen Enden über eine Sternverzahnung 45 in Dreheingriff stehen. Die Wellen 25 sind an ihrem oberen Ende mit einem Kopfstück 25a versehen, das mittels Dichtringen 46 abgedichtet jeweils in einer Stufenbohrung 39a der Deckplatte 39 sitzen. Die Antriebswellen 25 sind mit den Kopfstücken 25a in den Stufenbohrungen 39a durch die Verschlußstücke 47 gesichert, die mit der Deckplatte 39 verschraubt sind. Das Verschlußstück 47 ist mit einer Bohrung 47a versehen, die mit der hohlen Antriebswelle 25 in Verbindung steht. Das unter hohem Druck stehende Strömungsmittel wird über eine flexible Leitung 48 herangeführt, dessen Anschlußstück 48a mittels einer in die Deckplatte 39 eingeschraubten Überwurfmutter 49 mit der Deckplatte 39 strömungsmitteldicht verbunden ist. Der Eingriff zwischen Verschlußstück 47 und Deckplatte 39 ist durch einen Dichtungsring 50 gesichert. Bei Erregung eines mit der Welle 41 verbundenen Antriebsmotors 51 dreht sich das mittige Zahnrad 43, das die außenliegenden Zahnräder 44 und somit die Antriebswellen 25 dreht. Das unter hohem Druck stehende Strömungsmittel wird über die Leitungen 48 herangeführt und durch das ortsfeste Verschlußstück 47 in das sich drehende Kopfstück 25a und damit in die Welle 25 eingeleitet. Das unter Druck stehende Strömungsmittel tritt durch die Druckwasserdüsen 27 aus. Die Grundplatte 38 ist mit einem umlaufenden Ansatz 38a versehen, so daß die Schneideinrichtung 36 geführt auf den Kasten 2a des Kopfstücks 2 aufgesetzt und positioniert werden kann, wodurch die Antriebswellen 25, die vorzugsweise flexibel gestaltet sind, auf die Eintrittsöffnungen der Verbindungsrohre 4, insbesondere der Steuerstabführungsrohre, ausgerichtet sind. Die Montageabfolge der Elemente der Schneideinrichtung bei deren Zusammenbau kann insbesondere aus Figur 9 abgelesen werden.

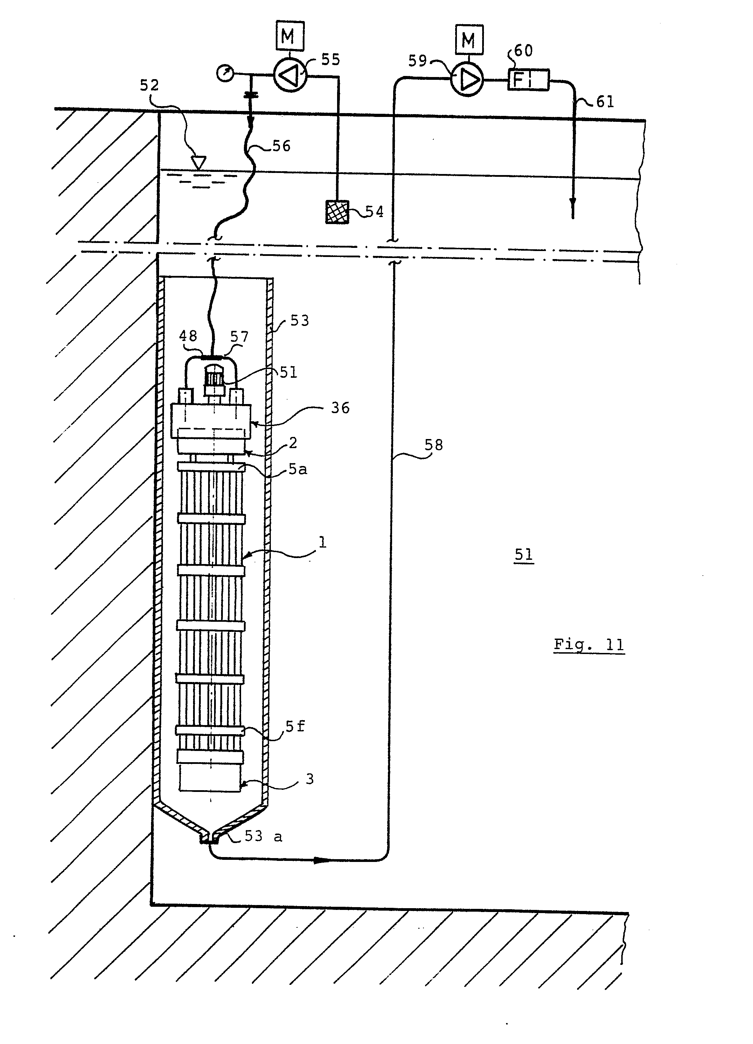

Die Schemaskizze gemäß Figur 11 dient der Erläuterung des Einsatzes der Innenschneideinrichtung in einem mit Wasser gefüllten Lagerbecken 51, vorzugsweise Brennelementlagerbecken eines Kernkraftwerks, dessen Wasserspiegel mit 52 gekennzeichnet ist. Ein von innen zu schneidendes Brennelement 1 wird in einen Strömungskasten 53 mittels nicht dargestellter Manipulationshilfen abgesenkt und dort gehalten.

Das Lagerbeckenwasser selbst wird als schneidendes Strömungsmittel benutzt. Zu diesem Zwecke wird das Wasser über einen Ansaugkasten 54 mittels einer von einem Motor M angetriebenen Pumpe 55 angesaugt und über eine Druckleitung 56 und einen Verteiler 57 den Leitungen 48 zugeführt. Das Wasser mit den aus dem Schneidvorgang resultierenden Teilchen wird am unteren Ende 53a des Schneidkastens mittels einer Leitung 58 und einer mittels eines Motors angetriebenen Saugpumpe 59 abgesaugt und über einen Filter 60 gedrückt, um die Werkstoffteilchen von dem Wasser abzutrennen. Das gesäuberte Wasser wird über eine Leitung 61 dem Lagerbecken wieder zugeführt.

Wie aus den Figuren 9 und 11 ersichtlich ist, tritt der Schneidstrahl gegen Ende der durch Trennung der Verbindungsrohre 4 in das Wasser des Lagerbeckens 1 ein und wird dort so stark verwirbelt, daß er das Mantelrohr der die Verbindungsrohre umgebenden Brennstäbe 6 nicht verletzen kann. Durch das Absaugen des Wassers aus dem Behälter 53 wird eine zur Erstreckungsrichtung des Brennelements 1 parallele Strömung erzeugt, die diesen Schutz der Brennstäbe verbessert und gleichzeitig für einen sicheren Abtransport der Werkstoffteilchen sorgt. Es kann ausreichend sein, daß zum Aufbau einer solchen zur Erstekkungsrichtung des Brennelements parallelen Strömung der Kasten 53 sich nicht über die gesamte Länge des Brennelements erstecken muß, wenn im Bereich des Fußstücks 3 eine hinreichend starke Strömung mittels der Pumpe 59 aufgebaut wird.

STEAG Kernenergie GmbH
Bismarckstraße 54

4300 Essen 1

Stichwort: Deassemblierung

Az. 748

**Verfahren zum Deassemblieren von Brennelementen und**

**Vorrichtung zur Durchführung des Verfahrens**

<u>Patentansprüche</u>

1. Verfahren zum Deassemblieren von Brennelementen
mit zwei Endstücken, einer Vielzahl von mit den
Endstücken verbundenen Verbindungsrohren, insbesondere Steuerstabführungsrohren, einer Vielzahl
von mit den Verbindungsrohren verbundenen und
zwischen den Endstücken angeordneten Abstandhaltern, in denen eine Vielzahl von um die Verbindungsrohre verteilt angeordneten Brennstäben
reibschlüssig gehalten ist, bei dem die Verbindungsrohre von innen geschnitten, danach eines
der Endstücke entfernt und die Brennstäbe aus
den Abstandhaltern herausgezogen werden,
dadurch gekennzeichnet,

daß die Verbindungsrohre etwa im Bereich der
maximalen Stableistung zwischen zwei Abstandhaltern
von innen, vorzugsweise gleichzeitig, geschnitten
werden, daß eines der Endstücke mit den mit ihm
verbundenen Abschnitten der Verbindungsrohre
und mit diesen verbundenen Abstandhaltern um
ein vorgegebenes Stück in Längserstreckungsrichtung des Brennelementes verschoben wird, die
Brennstäbe im Bereich zwischen den Schnittenden
der Verbindungsrohre an ihren Mantelflächen lagenweise erfaßt und dabei auf Abstand festgehalten werden und danach die Endstücke mit den mit ihnen verbundenen Strukturelementen des Brennelements von den Brennstäben abgezogen werden.

2. Verfahren nach Anspruch 1, dadurch gekennzeichnet,

daß zunächst das eine Endstück mit den mit ihm verbundenen Strukturelementen von den Brennstäben abgezogen wird, ehe das andere Endstück abgezogen wird.

3. Verfahren nach Anspruch 1 oder 2, dadurch gekennzeichnet,

daß vor dem Abziehen des einen Endstückes die Brennstäbe an mindestens einer von der ersten Erfassungsstelle in Längsrichtung des Brennelements gesehen entfernten zweiten Stelle erfaßt und lagenweise auf Abstand gehalten werden, um die Bündelkonfiguration der Brennstäbe aufrechtzuerhalten.

4. Verfahren nach einem der Ansprüche 1 - 3, dadurch gekennzeichnet,

daß zwischen den Brennstäben die Finger eines Fingergreifers eingeführt werden, bei dem die Breite der Finger nach Einführen des Fingergreifers vergrößerbar ist.

5. Verfahren nach einem der Ansprüche 1 - 4, bei dem die Brennstäbe in einen Behälter eingebracht werden, dadurch gekennzeichnet, daß mit Hilfe des Eingriffs an den Mantelflächen das Brennstabbündel in einen Behälter eingebracht wird, wobei der Eingriff an den Brennstäben erst gelöst wird, wenn sich bei in den Behälter teilweise eingeführten Brennstäben die Eingriffsstelle kurz über der Behälteröffnung befindet.

6. Verfahren nach Anspruch 5, dadurch gekennzeichnet,

daß das Brennstabbündel über einen Trichter in den Behälter eingebracht wird, dessen Einführungsöffnung an den Bündelquerschnitt und dessen Austrittsöffnung an den Behälterquerschnitt angepaßt sind.

7. Verfahren nach einem der Ansprüche 1 - 6, dadurch gekennzeichnet,

daß die Verbindungsrohre mit einem mechanischen Schneidwerkzeug geschnitten werden.

8. Verfahren nach einem der Ansprüche 1 - 6, dadurch gekennzeichnet,

daß die Verbindungsrohre mit einem unter hohen Druck stehenden Strömungsmittelstrahl, vorzugsweise Wasser, geschnitten werden.

9. Verfahren nach Anspruch 8, dadurch gekennzeichnet,

daß die Verbindungsrohre unter Wasser in einem Brennelementlagerbecken geschnitten werden.

0164510

10. Verfahren nach Anspruch 9,
dadurch gekennzeichnet,

daß die Verbindungsrohre im Brennelementlagerbecken
mit die Brennelemente umgebenden Beckenwasser
geschnitten werden.

11. Verfahren nach Anspruch 10,
dadurch gekennzeichnet,

daß beim Schneiden eine gerichtete Strömung um
das jeweilige Brennelement aufrechterhalten wird
und die beim Schneiden anfallenden Teilchen des
Verbindungsrohrmaterials aus der Strömung herausgefiltert werden.

12. Vorrichtung zur Durchführung des Verfahrens nach
einem der Ansprüche 1 - 11 mit mindestens einer
Einrichtung zum Innenschneiden der Verbindungsrohre bestehend aus einem Schneidkopf und einer
Antriebswelle und mit mindestens einer Einrichtung
zum Erfassen der Brennstäbe, dadurch gekennzeichnet,

daß sie mindestens einen von der Seite her zwischen
die Lagen der Brennstäbe (6) einführbaren Fingergreifer (7;8;9) aufweist, dessen Fingerbreite
derart veränderbar ist, daß die Finger (10) an
den Mantelflächen der Brennstäbe (6) reibschlüssig
und/oder formschlüssig anlegbar sind.

13. Vorrichtung nach Anspruch 12, dadurch gekennzeichnet,

daß in Längsrichtung des Brennelements gesehen
mehrere übereinander angeordnete Fingergreifer
(7,8,9) vorgesehen sind.

5

0164510

14. Vorrichtung nach Anspruch 12 oder 13,
dadurch gekennzeichnet,

daß die Finger mit einem Grundkörper in Abständen entsprechend den Abständen der Brennstäbe
verbunden sind und jeweils eine durch ein Strömungsmittel beaufschlagbare Kammer (32;34) aufweisen,
die von mindestens einer elastisch verformbaren
und an die Mantelfläche der zugeordneten Brennstäbe
anlegbaren Wandung (30,31;35) begrenzt ist.

15. Vorrichtung nach Anspruch 14, dadurch gekennzeichnet,

daß der einzelne Finger (10a;10b) aus einem starr
mit dem Grundkörper (28) verbundenen Fingerrahmen
(29) besteht, mit dem mindestens eine flexible
Membran (30;31;34;35) verbunden ist.

16. Einrichtung zum Innenschneiden von Rohren mindestens bestehend aus einem Schneidkopf und einer
Antriebswelle, insbesondere für den Einsatz in
eine Vorrichtung nach einem der Ansprüche 12 - 15,
dadurch gekennzeichnet,

daß in dem Schneidkopf (12) ein entgegen der
Wirkung einer Feder (17) radial aus dem Schneidkopf
herausschiebbares Schneidwerkzeug (15) gelagert
ist, das mittels eines über die Antriebswelle
(13) herangeführten Strömungsmittels in Schneidposition verschiebbar ist.

17. Einrichtung zum Innenschneiden von Rohren mindestens bestehend aus einem Schneidkopf und einer
Antriebswelle, insbesondere für den Einsatz in
eine Vorrichtung nach einem der Ansprüche 12 - 15,
dadurch gekennzeichnet,

daß in dem Schneidkopf (18) ein um eine quer zum Schneidkopf sich erstreckende Achse (21) verschwenkbares Schneidwerkzeug (20) mit einer bezüglich der Achse exzentrischen Massenverteilung gelagert ist, das zusätzlich quer zur Achse verschwenk- und verschiebbar ist und daß das Schneidwerkzeug (20) durch ein vorgespanntes Federsystem (23, 24) mit gegenläufigen Federmomenten in Schneidposition bringbar ist, wobei der Schneiddruck bestimmt ist durch die Vorspannung des Federsystems und durch die bei Drehung des Schneidkopfes (18) einstellende Zentrifugalkraft.

18. Einrichtung zum Innenschneiden von Rohren mindestens bestehend aus einem Schneidkopf und einer Antriebswelle, insbesondere für den Einsatz in eine Vorrichtung nach einem der Ansprüche 12 - 15, dadurch gekennzeichnet,

daß in dem Schneidkopf (26) mindestens eine vorzugsweise fokussierende Schneiddüse (27) angeordnet ist, die über die Welle (25) mit einem unter hohen Druck stehenden Strömungsmittel beaufschlagbar ist.

19. Einrichtung nach Anspruch 18, dadurch gekennzeichnet,

daß bei Einsatz der Schneideinrichtung in einem Strömungsmittelbecken, insbesondere Wasserbecken, Schneidkopf (26) und Welle (25) bezüglich des Strömungsmittels in Reihe mit einem Filter (60) liegen und das Brennelement in einem mit dem Filter (60) verbundenen Strömungskasten (53) angeordnet ist.

20. Einrichtung nach einem der Ansprüche 16 - 19,
dadurch gekennzeichnet,

daß der Schneidkopf (12;18;26) mit einer flexiblen
Antriebswelle (13;19;25) verbunden ist.

21. Einrichtung nach einem der Ansprüche 16 - 20,
dadurch gekennzeichnet,

daß die Antriebswellen (13;19;25;26) mehrerer
Schneidköpfe (12;18;26) antriebsmäßig mit einem
einzigen Antrieb (51) gekoppelt sind.

0164510

Fig. 1a          Fig. 1b          Fig. 1c          Fig. 1d

Fig. 2a

Fig. 2b

Fig. 3a

Fig. 3b

Fig. 4a

Fig. 4b

Druckwasser

Schneide 15a

Schnitt

Düse

0164510

2/6

Fig. 6

Fig. 7

Fig. 8

Fig. 5

Wasseranschluß

0164510

3/6

Fig. 9

0164510

Fig. 10

51

Fig. 11

Europäisches
Patentamt

**EUROPÄISCHER RECHERCHENBERICHT**

0164510

Nummer der Anmeldung

EP 85 10 3665

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 066 695 (WESTINGHOUSE ELECTRIC) <br><br> * Seite 3, Zeilen 10-16; Seite 4, Zeilen 1-9,14-34; Seite 5, Zeilen 19-27; Abbildungen 1,2,4 * & US - A - 4 446 098 (Kat. D) <br><br> --- | 1,12, 13,16, 21 | G 21 C 19/34 |
| A | FR-A-2 499 296 (FORTIN ANTOINE) <br> * Seite 2, Zeilen 26-31; Seite 4, Zeilen 6-10; Abbildungen 2,3; Ansprüche 1,3,4 * <br><br> --- | 1,7 | |
| A,D | DE-A-3 007 876 (ERNST PETER) <br> * Seite 6 * <br><br> --- | 18 | |
| A | TECHNISCHE RUNDSCHAU, Band 55, 18. Oktober 1963, Seite 25, Hallwag, Bern, DE; A. HANSEN et al.: "Das Abschneiden gebrauchter Brennelemente im Risö" <br> * Seite 25, 4. Spalte von links, 1. Absatz; Abbildung 1 * <br><br> --- | 6,19 | **RECHERCHIERTE SACHGEBIETE (Int. Cl.4)** <br><br> G 21 C 19/00 |
| A | BE-A- 682 592 (LEYBOLD-HOCHVAKUUM) <br> * Seite 7, Zeilen 3-12; Seite 7, Zeile 25 - Seite 8, Zeile 11; Abbildungen 4-8 * <br><br> ----- | 1,12, 13 | |

Der vorliegende Recherchenbericht wurde für alle Patentansprüche erstellt.

| Recherchenort <br> DEN HAAG | Abschlußdatum der Recherche <br> 15-08-1985 | Prüfer <br> JANDL F. |
|---|---|---|